# EUROPEAN PATENT SPECIFICATION

(11) **EP 0 701 388 B1**
(45) Date of publication and mention of the grant of the patent: **20.09.2000**
(21) Application number: 95111507.0
(22) Date of filing: 21.07.1995
(51) Int. Cl.: H05B 6/80, H05B 6/68

(54) **Cooking oven provided with an improved humidity measurement arrangemet**
Kochofen ausgestattet mit einem verbesserten Feuchtigkeitssensor
Four de cuisine équipé d'un dispositif de mesure de l'humidité amélioré

(30) Priority: 09.09.1994 IT PN940051
(43) Date of publication of application: 13.03.1996
(73) Proprietor: ELECTROLUX ZANUSSI GRANDI IMPIANTI S.p.A., 33170 Pordenone (IT)
(72) Inventor: Tassan Mangina, Franco, I-33080 Marsure di Aviano, Pordenone (IT)
(74) Representative: Giugni, Valter

(56) References cited:
- EP-A- 0 567 813
- PATENT ABSTRACTS OF JAPAN vol. 009, no. 199 (P-380), 16 August 1985 & JP-A-60 064243 (TOYOTA JIDOSHA KK), 12 April 1985,
- PATENT ABSTRACTS OF JAPAN vol. 012, no. 253 (P-731), 16 July 1988 & JP-A-63 042459 (FUJIKURA LTD), 23 February 1988,

## Description

The present invention refers to a food cooking oven provided with a moisture measurement arrangement so as to enable the degree of humidity in the cooking cavity to be automatically adjusted to the pre-set level during food cooking processes. Such a food cooking oven is known from EP-A-567 813.

In the following description of the present invention reference is made in particular to an oven for cooking food in catering or foodservice establishments. It will however be appreciated that what is described and claimed here equally applies to any other type of food cooking ovens.

Food cooking ovens are already known which are substantially formed by a box-like casing defining an inner cooking cavity in which the food to be cooked is properly arranged, a forced-draft hot air circulation being generated in said cooking cavity by means of a gas-fired or electric heat generator and at least a fan.

These food cooking ovens are provided with appropriate thermostatically operating arrangements for automatic adjustment of the selected food cooking temperature, these thermostatic control means being associated with corresponding temperature selection means which are adjusted by the user on the desired temperature setting before each cooking process is started, in accordance with the type and the amount of food to be cooked.

The thermostatic temperature control means of these ovens operate in such a manner as to keep the cooking temperature within pre-determined limits inside the cooking cavity of the oven, generally by cyclically switching on and off both the heat generator and/or the possibly provided steam generator, if the oven is designed to also cook by steam, and the fan so as to appropriately vary the flow of hot air circulating through the cooking cavity.

These cooking ovens, however, are not provided with any arrangement for adjusting the humidity of the air inside the cooking cavity, such a humidity of the air being in this case a factor that, combined with the temperature, decisively affects both the quality of the cooking process as a whole and the taste of the food being cooked, since said humidity is variable depending on a number of parameters of the cooking process such as the cooking temperature, the type and the actual amount of food to be cooked, the replacement rate of the air in the cooking cavity, and so on, so that these appliances are actually unable to ensure such optimum food cooking results as they on the other hand certainly would in a most desirable manner, under the same performance conditions, if such a humidity adjustment function could be carried out in the process.

On the other hand, humidity control and measurement devices are known in connection with a number of applications of different kind and they are generally constituted by semiconductor-type sensors, which are arranged in the humid rooms or compartments to be controlled and are connected with electric bridge-like measurement circuits that are adapted to detect the corresponding electric signals generated by said sensors so as to automatically convert them into respective levels of humidity in the room being measured.

Still other types of moisture measurement arrangements are constituted by elements for measuring the concentration of oxygen in gaseous mixtures, such as for instance zirconium-oxide cells, operating according to well-known principles.

However, all such humidity measurement devices and arrangements, while ensuring accurate and correct measurement results, are generally poorly suited to applications involving the measurement of humidity in a food cooking environment, where temperatures prevail that may be situated anywhere between approx. 100°C and 250°C according to the type and the amount of food to be cooked, since the devices would in the first case become damaged, and therefore would be unable to correctly perform their duty any longer, and, in the second case, they would not be in a position to ensure a reliable operation any further, due to their sensing elements being subject to soiling under alteration of the related measurement values.

It is therefore a purpose of the present invention to overcome the drawbacks and the limitations of the afore cited humidity measurement devices and arrangements by providing a food cooking oven comprising a humidity measurement arrangement according to the appended claims and the following description which is given by way of non-limiting example with reference to the accompanying drawing, in which:
- Figure 1 is a vertical, half-depth cross-sectional view showing schematically a food cooking oven according to the present invention;
- Figure 2 is a horizontal, cross-sectional view of the oven illustrated in Figure 1;
- Figure 3 is a view of a construction detail of the humidity measurement arrangement;
- Figure 4 is a block flow-chart of an operation sequence of the oven according to the present invention;
- Figure 5 is a diagram of the composition of a gas mixture, composed by air and water vapour, versus the percentage of air;
- Figure 6 is a vertical, half-depth cross-sectional view of a cooking oven according to an improved embodiment of the present invention;
- Figures 7 and 8 are an enlarged view of a front section and a horizontal section, respectively, of the improved embodiment illustrated in Figure 6.

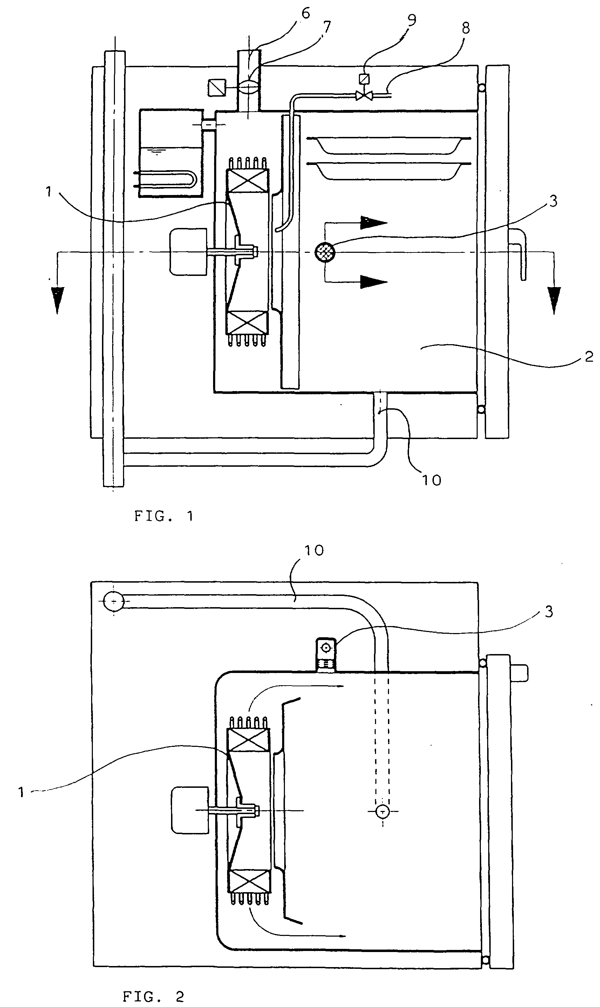

Referring now to Figure 1, this is shown to illustrate the interior of the cooking cavity of a food cooking oven for professional kitchens, comprising a motor-driven fan 1 arranged on the rear side of said cooking cavity, as well as appropriate arrangements (not shown) to generate and propagate microwaves inside said cooking cavity, for instance of the type described in the European patent application no. 90119715 filed by the same applicant.

The food contained in said cooking cavity may be processed in a number of different ways, such as for instance by forced-draft circulation of hot air produced by suitable gas-fired or electric heat generating means (not shown) of some per sè known type, by steaming or by a combination of steaming and forced-convection hot air, or even by microwaves alone or combined with forced-convection hot air and/or steam.

The oven being considered also comprises the humidity measurement arrangement 3, which is shown to be housed in the cooking cavity 2 and is arranged to operate in the way that will be described below.

Such an arrangement is substantially constituted by probe means adapted to measure the partial pressure of oxygen inside the cooking cavity with respect to the external environment, said probe means being appropriately arranged and insulated to exclude any interference by the other gases being present in the cooking cavity, and it is common knowledge that, based on such a measurement, the value of the humidity prevailing in the cooking cavity can then be inferred.

To mere informatory purposes, the state of the art in this particular field is briefly recalled here: a zirconium-oxide based probe for detecting oxygen concentrations is generally constituted by a cell which features a pair of electrodes (usually of platinum) applied thereto, and which is kept at a constant temperature T (normally 350°C).

"Reference air" with a known and constant oxygen concentration is delivered on one of the two sides of the cell. By measuring with a suitable millivoltmeter the electromotive force of the cell, a direct indication of the concentration of oxygen in contact with the cell, on the "measurement" side thereof, is obtained.

The above described method has for instance found a wide application in the measurement of oxygen concentrations in flue gases.

On the other hand, it may be also used advantageously for measuring humidity in high-temperature air-steam mixtures.

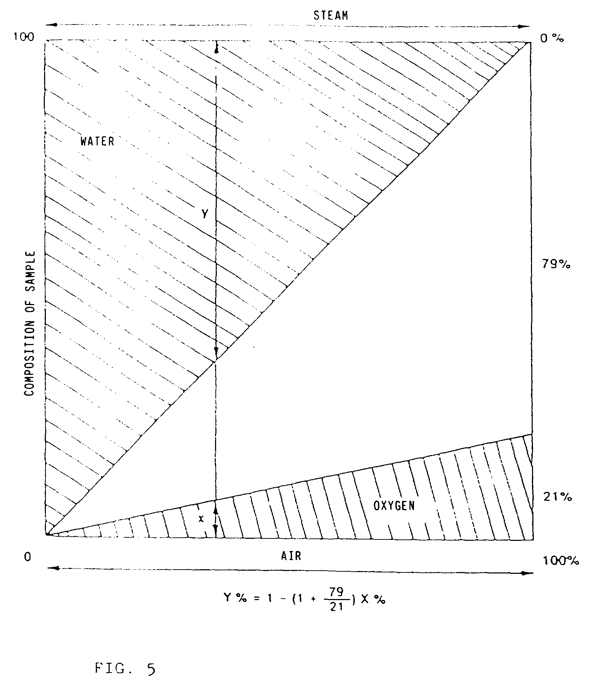

Based on the assumption that the oxygen/nitrogen ratio in the air is constant, a measurement of the concentration of oxygen enables the percentage of a third gas, ie. water vapour in this particular case, to be determined directly when it is added to a sample of the air being measured. In fact, the presence of a third gas added to a sample of air has the effect of reducing in a proportional manner the presence of oxygen and nitrogen in the sample, as this is best shown in Figure 5. As a result, determining the relative concentration of oxygen in such a sample, or in a particular room which was originally filled only with air, ie. such as the interior of a cooking cavity at the beginning of the cooking process, allows the amount of gases, such as water vapour, introduced in and differing from the original components of the mixture to be determined as well.

Therefore, by using a normal zirconium-oxide probe along with an appropriate converter means it is possible to measure the humidity prevailing in air/steam mixtures at temperatures of up to approx. 600°C, since it has been observed that the output signal from the probe is not affected to any significant extent by the variations in the temperature and humidity of the ambient air used as a reference.

The oven may further be provided with a boiler 4 for steam generation purposes, as well as an appropriate conduit 5 for delivering said steam from the boiler 4 to the cooking cavity 2.

The oven may be additionally provided also with a flue riser 6 for exhausting flue gases and excess vapours, as well as a venting shutter 7 for shutting said flue riser to the purpose of adjusting the internal atmosphere in the oven cavity; it may be further provided with a conduit 8 for letting in water against the blades of the fan 1 provided to ensure forced-draft circulation of the hot air, so as to produce an atomization effect when it comes into contact with the heating elements, as well as with a corresponding shut-off valve 9 associated with said conduit 8.

Finally, a drain conduit 10 is connected to the bottom of said cooking cavity so as to enable residual liquids, such as fat, water and other cooking by-products, to be conveniently removed therefrom.

The present invention consists in providing a cooking oven with a humidity measurement arrangement as described, and adapting both said arrangement 3 and the cooking oven to a mutually compatible operation so as to optimize the performance capabilities of the same oven.

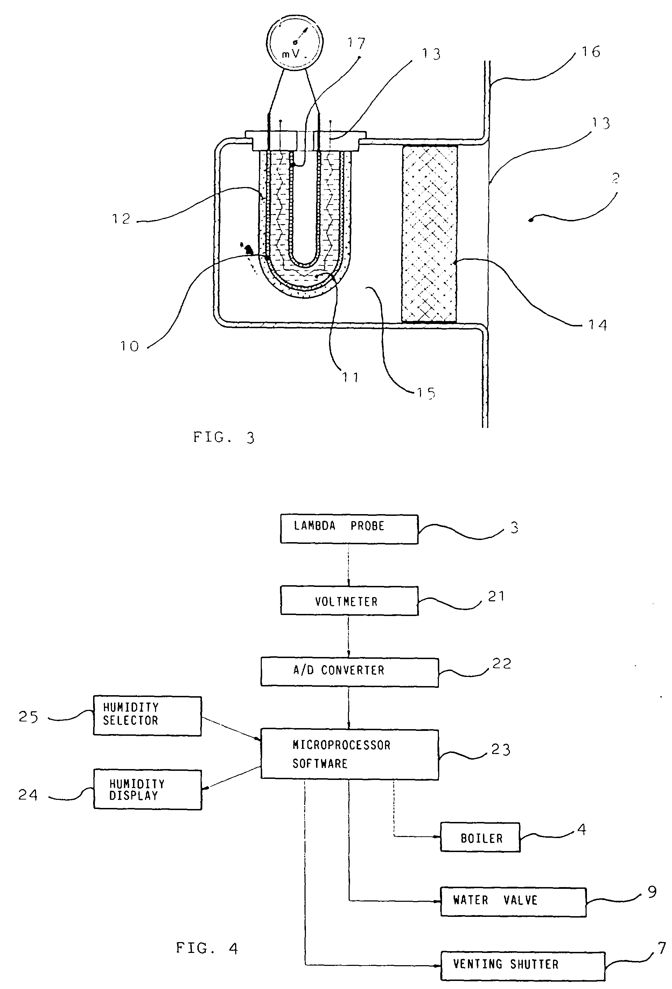

Referring now to Figure 3, it can be noticed that the humidity measurement arrangement 3 consists substantially of:
- an zirconium oxide (ZrO₂) based solid electrolyte 11,
- a layer of porous ceramics 12 protecting the porous platinum electrode 10 against aggessive agents,
- a resistive element 13 to heat the zirconium oxide to a temperature of approx. 350°C in view of increasing its electric conductivity,
- a fat filter 14 (of the labyrinth, metal gauze or similar type), possibly removable for cleaning.

This arrangement is accomodated in a recess 15 provided, preferably by press forming, in a wall 16 of the cooking cavity of the oven.

The arrangement also comprises a surface of porous platinum 17 having a sealed tubular form which, like the afore cited electrode 10, acts as a catalytic-effect electrode to amplify the electromotive force that is generated owing to the difference between the partial pressure of the oxygen in the ambient air and the one in the cooking cavity.

In view of preventing fat and other soiling particles from cooking ingredients from settling upon the internal electrode of said probe during the use of the oven, thereby sealing up the same electrode and, as a result, putting the probe out of service, it is advantageous that a protective baffle 14 with fat and soil retaining properties be removably provided at the entrance 13 of the recess 11 that houses the probe.

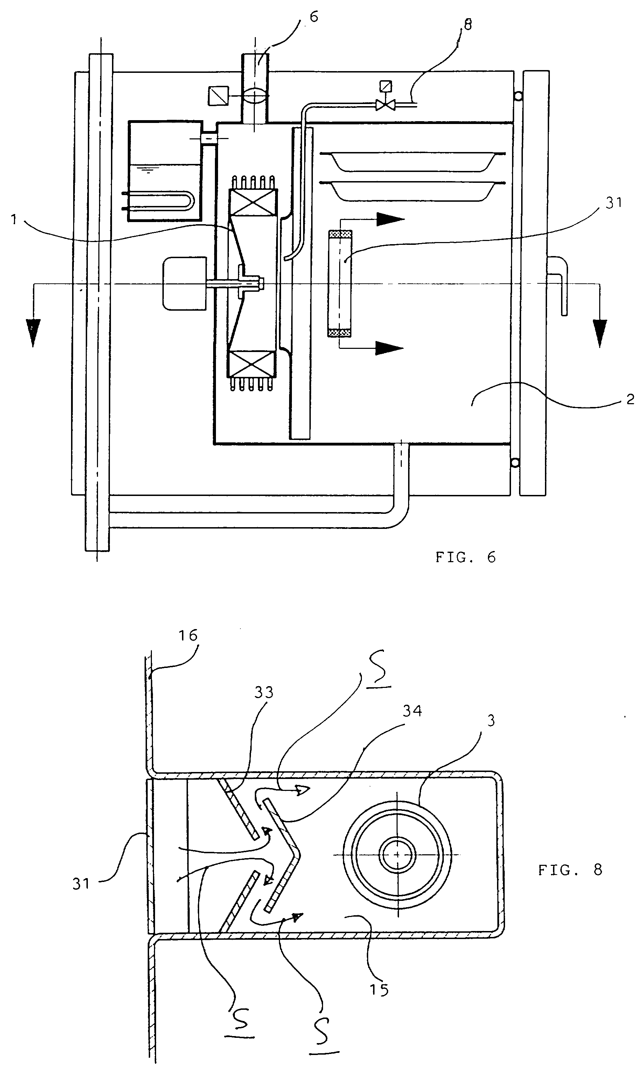

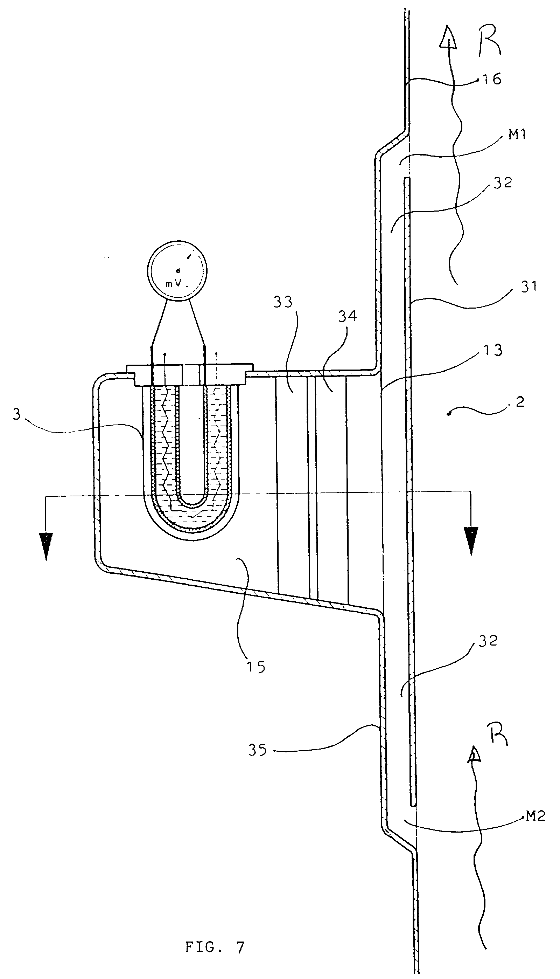

However, in order to be removable such a protective baffle needs some constructional complications to be implemented for its assembly and disassembly, so that, in view of doing away with such practical drawbacks, an improved embodiment of the present invention is further proposed. This is illustrated in the Figures 6 to 8 which show that the probe 3 is housed in a recess 15 provided in a wall 16 of the cooking cavity 2, whereas said recess 15 is however provided in a re-entering portion 35 of the wall 16 and said re-entering portion is partially covered by a cover 31 so that hollow spaces or double-wall configurations 32 are obtained between said cover 31 and said re-entering portion 35.

The slits M1 and M2 through which said hollow spaces open towards the interior of the cooking cavity are provided to enable steam to diffuse so as to reach the probe. The lower slit M2 serves additionally the purpose of ensuring draining of washing or condensation liquids that seep through the other slit M1.

In a most advantageous manner, said cover is arranged in such a way that said slits M1 and M2 are flush with the wall so as to avoid affecting the air flow generated by the fan arrangement; furthermore, it is oriented in such a manner that the slits are arranged orthogonally with respect to the air flow R which is generally conveying fat and other soil particles that may occlude the probe.

For obvious reasons, said particles tend to follow the trajectory R without penetrating into the slits, whereas humidity diffuses quickly into the hollow space 32 and, from there, into the interior of the recess 15, until it reaches the probe, even without being assisted by an air circulation.

It is possible that, during operation transients or during phases provided to wash the cooking cavity, soiling particles seep through the hollow space 32 and, from there, enter the recess 15. In order to prevent such particles from depositing onto the probe, it is advantageous to provide a labyrinth-type filter, which may for instance be constituted by a plurality of walls 33, 34 which would force the air flow to follow a path extending partly backwards between the entrance 13 of the recess and the probe, so as to stop it.

In a preferred manner, such a filter is made, so as most clearly illustrated in Figure 8, so that the preferential air-circulation path S inside it is orthogonal with respect to the direction of the air flow coming from the hollow space 32 and making its way into the recess 15, thereby maximizing its stoppage effect.

It will be readily appreciated that the possibility of relying on a timely and reliable measure in the form of an analog electric signal which is representative of the humidity prevailing in the cooking cavity of the oven creates in turn the possibility of using said signal to generate indications for display outside the oven and also to automatically control some actuating members, such as for instance for switching the boiler 4 on and off, adjusting the venting shutter 7 of the flue riser 6 and controlling the shut-off valve 9 of the water conduit 8, so as to generate and maintain pre-selectable temperature and humidity conditions inside the cooking cavity.

The flow-chart illustrating the operation of the various members is shown in the form of a block diagram in Figure 4, where it can be seen that the arrangement 3, which may be defined as a lambda probe in accordance with international conventions designating the lambda excess air factor as the ratio of the value being examined to the stoichiometric value of the combustion air, is connected to a voltage meter 21 supplying an analog/digital voltage converter 22 which in turn sends the converted signal to an appropriately programmed processing and control means 23 which is adapted to both supply an appropriately provided display 24 on the outside of the oven with signals indicative of the detected humidity contents in the oven cavity, and receive humidity-degree signals as set through appropriate adjusting means 25.

A particularly advantageous opportunity created by such a function lies in the possibility of said processing and control means 23 to automatically adjust the humidity inside the cooking cavity of the oven to the pre-set value by constantly processing and comparing said pre-set value with the value being detected by the measurement arrangement 3, and then controlling with any of a number of well-known state-of-art techniques the operation of the boiler 4, the water inlet valve 9 and the venting shutter 7 accordingly, so as to automatically attain and maintain said pre-set value.

The oven is of course provided with a number of further elements and arrangements which, owing to their not being an object of the present invention, are omitted.

It will be appreciated that, although the present invention has been described on the example of a preferred embodiment thereof and using a generally known terminology, it nevertheless cannot be considered as being limited thereby, since anyone skilled in the art will be able to make a number of variations and modifications pertaining to both the construction and the shape of the arrangement within the scope of the invention as defined in the appended claims.

## Claims

1. Food cooking oven, in particular for use in commercial or collective foodservice applications, comprising a cooking cavity (2), heat generating means, which are possibly associated with a fan (1) for fan-assisted cooking and are adapted to transfer heat to the inside of said cooking cavity, and being provided with a moisture measurement arrangement so as to enable the degree of humidity in the cooking cavity to be automatically adjusted to a pre-set level during the cooking processes, **characterized in that** the moisture measurement arrangement comprises, a probe (3) capable of measuring the relative concentration of oxygen within said cavity and being arranged in a recess (15) provided in a wall (16) of said oven.

2. Oven according to claim 1, **characterized in that** said probe is a zirconium-oxide cell having one of its sides open towards the outside atmosphere and the other one of its sides open towards the inside of said cooking cavity.

3. Oven according to claim 2, **characterized in that** it is provided with indicating means (24) adapted to display the degree of humidity prevailing inside said cooking cavity, and processing and control means (23), which preferably comprise at least an electronic microprocessor, and that said probe is connected also indirectly to said control means, the latter being adapted to supply the information concerning the level of humidity prevailing inside said cooking cavity for display on said indicating means (24).

4. Oven according to claim 2 or 3, and comprising at least one of following means: a steam generator means (4), a shut-off valve means (9) in a conduit (8) for letting water into said cooking cavity, an adjustment means (7) for adjusting gas and vapour outlet from the interior to the exterior of said cooking cavity, **characterized in that** it is provided with setting means (25) adapted to select a pre-definable level of humidity, said setting means (25) being connected to said processing and control means (23).

5. Oven according to claim 4, **characterized in that** said processing and control means (23) are adapted to automatically determine and maintain inside said cooking cavity the degree of humidity as pre-defined by said setting means (25), by acting on at least one of said steam generator means (4) or water inlet shut-off valve means (9) or steam and vapour outlet adjustment means (7).

6. Oven according to any of the preceding claims, **characterized in that** said probe is arranged inside an outwardly protruding recess (15) formed in said wall (16) of said cooking cavity.

7. Oven according to claim 6, **characterized in that** the entrance (13) of said recess (15) is protected by an oxygen-permeable, fat retaining and removable baffle (14).

8. Oven according to claim 6, **characterized in that** said recess (15) is formed in a re-entering portion (35) of the wall of the cooking cavity, said re-entering portion being partly protected by a cover (31) which combines with said re-entering portion to form at least a double-wall configuration (32) connecting said recess with said cooking cavity (2).

9. Oven according to claim 8, **characterized in that** said cover (31) is arranged so as to be flush with the respective wall (16).

10. Oven according to claim 8 or 9, **characterized in that** said at least one double-wall configuration (32) defines at least a slit (M1, M2) between said cover and said re-entering portion, the longitudinal axis of said at least a slit extending parallelly to the air flow (R) reaching said slit.

11. Oven according to any of the preceding claims 8 to 10, **characterized in that** a labyrinth-type filter (33, 34) is arranged between the entrance (13) of said recess and said probe, said filter being oriented so that the preferential path (S) followed by the air through it is orthogonal to the direction of the air in said double-wall configuration (32).

## Patentansprüche

1. Kochherd, insbesondere für kommerzielle Anwendungen oder für die Gemeinschaftsverpflegung, umfassend einen Kochraum (2), Wärmeerzeugungsmittel, welche möglicherweise mit einem Lüfter (1) zum Umluftkochen verbunden und so gestaltet sind, daß sie die Wärme zur Innenseite des Kochraumes übertragen und mit einer Feuchtigkeitsmeßeinrichtung versehen sind, um den Feuchtigkeitsgrad im Kochraum während der Kochvorgänge automatisch auf einem vorbestimmten Wert zu halten, dadurch gekennzeichnet, daß die Feuchtigkeitsmeßanordnung einen Meßfühler (3) umfaßt, welcher die relative Konzentration des Sauerstoffs innerhalb des Kochraumes erfaßt und in einer Ausnehmung (15) angeordnet ist, die in einer Wand (16) des Herdes vorgesehen ist.

2. Herd nach Anspruch 1, dadurch gekennzeichnet, daß der Meßfühler eine Zirkoniumoxidzelle ist, deren eine ihrer Seiten zur äußeren Atmosphäre offen liegt, und deren andere ihrer Seiten zur Innenseite des Kochraumes offen ist.

3. Herd nach Anspruch 2, dadurch gekennzeichnet, daß dieser mit einer Anzeigeeinrichtung (24) versehen ist, die den Grad der innerhalb des Kochraumes herrschenden Feuchtigkeit anzeigt, sowie mit Programm- und Steuermitteln (23), welche vorzugsweise mindestens einen elektronischen Mikroprozessor umfassen, und daß der Meßfühler auch indirekt mit den Steuermitteln verbunden ist, wobei letztere so gestaltet sind, daß sie die Informationen über den Grad der im Kochraum herrschenden Feuchtigkeit der Anzeige auf der Anzeigeeinrichtung (24) zuführen.

4. Herd nach Anspruch 2 oder 3, welcher mindestens eine der folgenden Einrichtungen umfaßt: einen Dampferzeuger (4), ein Absperrventil (9) in einer Leitung (8) zum Einlaß von Wasser in den Kochraum, eine Betätigungseinrichtung (7) zur Betätigung des Auslasses für Gas und Dampf von der Innenseite zur Außenseite des Kochraumes, dadurch gekennzeichnet, daß diese mit einer Einstelleinrichtung (25) zur Wahl eines bestimmten Feuchtigkeitsgrades versehen ist, wobei die Einstelleinrichtung (25) mit den Programm- und Steuermitteln (23) verbunden ist.

5. Herd nach Anspruch 4, dadurch gekennzeichnet, daß die Programm- und Steuermittel (23) so gestaltet sind, daß sie den Feuchtigkeitsgrad, der mit der Einstelleinrichtung (25) voreingestellt ist, durch Betätigung von mindestens einer der Einrichtungen, d. h. dem Dampferzeuger (4) oder dem Wassereinlaß-Absperrventil (9) oder der Dampfauslaß-Betätigungseinrichtung (7), innerhalb des Kochraumes automatisch bestimmen und halten.

6. Herd nach mindestens einem der vorhergehenden Ansprüche, dadurch gekennzeichnet, daß der Meßfühler innerhalb einer nach außen ragenden Ausnehmung (15), die in die Wand (16) des Kochraumes eingeformt ist, angeordnet ist.

7. Herd nach Anspruch 6, dadurch gekennzeichnet, daß der Eingang (13) der Ausnehmung (15) durch eine sauerstoffdurchlässige, fettabweisende und entfernbare Platte (14) geschützt ist.

8. Herd nach Anspruch 6, dadurch gekennzeichnet, daß die Ausnehmung (15) in einen Wiedereintrittsbereich (35) der Wand des Kochraumes eingeformt ist, wobei der Wiedereintrittsbereich teilweise durch eine Abdeckung (31) geschützt ist, welche mit dem Wiedereintrittsbereich so kombiniert ist, daß sie mindestens eine doppelwandige Anordnung (32) bildet, welche die Ausnehmung mit dem Kochraum (2) verbindet.

9. Herd nach Anspruch 8, dadurch gekennzeichnet, daß die Abdeckung (31) so angeordnet ist, daß sie mit der entsprechenden Wand (16) bündig verläuft.

10. Herd nach Anspruch 8 oder 9, dadurch gekennzeichnet, daß die mindestens eine doppelwandige Anordnung (32) mindestens einen Schlitz (M1, M2) zwischen der Abdeckung und dem Wiedereintrittsbereich aufweist, wobei die Längsachse des mindestens einen Schlitzes parallel zur Luftströmung (R), die diesen Schlitz erreicht, verläuft.

11. Herd nach mindestens einem der vorhergehenden Ansprüche 8 bis 10, dadurch gekennzeichnet, daß ein labyrinthartiges Filter (33, 34) zwischen dem Eingang (13) der Ausnehmung und dem Meßfühler angeordnet ist, wobei das Filter so ausgerichtet ist, daß der bevorzugte Weg (S), dem die Luft bei ihrem Durchströmen folgt, rechtwinklig zur Luftrichtung in der doppelwandigen Anordnung (32) verläuft.

## Revendications

1. Four de cuisine, destiné à être utilisé, en particulier, dans des applications de restauration commerciales ou collectives, comprenant une cavité de cuisson (2), des moyens générant de la chaleur, qui sont éventuellement associés à un ventilateur (1) pour une cuisson par air chaud pulsé et adaptés pour transférer la chaleur vers l'intérieur de ladite cavité de cuisson, et étant équipé d'un dispositif de mesure de l'humidité afin de permettre un ajustement automatique du degré d'humidité dans la cavité de cuisson à un niveau préréglé pendant le processus de cuisson, caractérisé en ce que le dispositif de mesure de l'humidité comprend une sonde (3) pouvant mesurer la concentration relative d'oxygène dans ladite cavité et étant placée dans un évidement pratiqué dans une paroi (16) dudit four.

2. Four selon la revendication 1, caractérisé en ce que ladite sonde est une cellule d'oxyde de zirconium ayant l'un de ses côtés ouvert vers l'atmosphère extérieure et l'autre côté ouvert vers l'intérieur de ladite cavité de cuisson.

3. Four selon la revendication 2, caractérisé en ce qu'il est équipé de moyens indicateurs (24) conçus pour afficher le degré d'humidité régnant à l'intérieur de ladite cavité de cuisson, et de moyens de traitement et de commande (23), qui comprennent, de préférence, au moins un microprocesseur électronique, et en ce que ladite sonde est également connectée indirectement auxdits moyens de commande, ces derniers étant conçus pour fournir des informations concernant le niveau d'humidité régnant à l'intérieur de ladite cavité de cuisson qui sont affichées sur les moyens indicateurs (24).

4. Four selon l'une quelconque des revendications 2 ou 3 et comprenant au moins l'un des moyens suivants : un moyen générant de la vapeur (4), un moyen formant vanne d'arrêt (9) dans un conduit (8) pour admettre de l'eau dans ladite cavité de cuisson, un moyen de réglage (7) permettant de régler la sortie de gaz et de vapeur de l'intérieur vers l'extérieur de ladite cavité de cuisson, caractérisé en ce qu'il est équipé de moyens de réglage (25) conçus pour sélectionner un niveau pouvant être prédéfini d'humidité, lesdits moyens de réglage (25) étant connectés auxdits moyens de traitement et de commande (23).

5. Four selon la revendication 4, caractérisé en ce que lesdits moyens de traitement et de commande (23) sont conçus pour déterminer et maintenir automatiquement à l'intérieur de ladite cavité de cuisson le degré d'humidité prédéfini par lesdits moyens de réglage (25), en agissant sur au moins l'un des moyens suivants, à savoir ledit moyen générant de la vapeur (4) ou ledit moyen formant vanne d'arrêt d'admission d'eau (9) ou ledit moyen de réglage de la sortie de vapeur (7).

6. Four selon l'une quelconque des revendications précédentes, caractérisé en ce que ladite sonde est placée à l'intérieur d'un évidement en saillie vers l'extérieur (15) formé dans ladite paroi (16) de ladite cavité de cuisson.

7. Four selon la revendication 6, caractérisé en ce que l'entrée dudit évidemment (15) est protégée par un écran perméable à l'oxygène, retenant la graisse et amovible (14).

8. Four selon la revendication 6, caractérisé en ce que ledit évidement (15) est formé dans une partie rentrante (35) de la paroi de la cavité de cuisson, ladite partie rentrante étant partiellement protégée par un couvercle (31) qui s'associe à ladite partie rentrante pour former au moins une configuration à double paroi (32) connectant ledit évidement à ladite cavité de cuisson (2).

9. Four selon la revendication 8, caractérisé en ce que ledit couvercle (31) est placé de telle manière qu'il soit à fleur avec la paroi respective (16).

10. Four selon la revendication 8 ou 9, caractérisé en ce que ladite au moins une configuration à double paroi (32) définit au moins une fente (Ml, M2) entre ledit couvercle et ladite partie rentrante, l'axe longitudinal de ladite au moins une fente s'étendant parallèlement au flux d'air (R) atteignant ladite fente.

11. Four selon l'une quelconque des revendications précédentes 8 à 10, caractérisé en ce qu'un filtre à labyrinthe (33, 34) est placé entre l'entrée (13) dudit évidement et ladite sonde, ledit filtre étant orienté de façon que le trajet préférentiel (S) suivi par l'air dans ce filtre soit orthogonal à la direction de l'air dans ladite configuration à double paroi (32).
